# EUROPÄISCHE PATENTSCHRIFT

(11) **EP 0 960 804 B1**
(45) Veröffentlichungstag und Bekanntmachung des Hinweises auf die Patenterteilung: **06.08.2003**
(21) Anmeldenummer: 99117538.1
(22) Anmeldetag: 04.03.1998
(51) Int. Cl.: B62D 65/00

(54) **Fahrzeugdach**
Vehicle roof
Toit de véhicule

(30) Priorität: 06.03.1997 DE 19709016
(43) Veröffentlichungstag der Anmeldung: 01.12.1999
(62) Teilanmeldung aus: 98916841.4
(73) Patentinhaber: ArvinMeritor GmbH, 63128 Dietzenbach (DE)
(72) Erfinder: Böhm, Horst, 60599 Frankfurt (DE); Grimm, Rainer, 60599 Frankfurt (DE); Becher, Thomas, 63110 Rodgau (DE)
(74) Vertreter: Oppermann, Mark, Dipl.-Ing.

(56) Entgegenhaltungen:
- DE-A- 3 429 880
- FR-A- 2 529 844
- US-A- 4 358 883
- US-A- 5 602 734

## Beschreibung

Die Erfindung bezieht sich auf ein Fahrzeugdach, insbesondere Kraftfahrzeugdach.

Bei herkömmlichen Fahrzeugkarosserien ist das Fahrzeugdach, das eine Dachöffnung aufweisen kann, der ein verlagerbarer Deckel oder ein Faltdach zugeordnet sein kann, ein fester in die Karosserie integrierter Bestandteil, der sich unmittelbar an die Säulen der Karosserie anschließt. Bei derartigen Karosserien sind der Dachhimmel und ggf. weitere Verkleidungsteile sowie andere im Dachbereich anzubringende Fahrzeugteile, wie Sonnenblenden, Haltegriffe und - falls vorhanden - Schiebe- oder Faltdachelemente nachträglich und teilweise vom Fahrzeuginnenraum her zu montieren.

Es sind aber auch bereits Fahrzeugdächer vorgeschlagen worden, die als Module getrennt von der Fahrzeugkarosserie hergestellt und mit ihren Außenrändern auf einen an den Karosseriesäulen angebrachten Karosserierahmen aufgelegt und mit diesem durch Kleben oder Schrauben fest verbunden werden (z.B. EP-A- 0 075 754 ). In diesem Zusammenhang wird in der DE-A- 28 45 708 ein Fahrzeugdach offenbart, das als vorgeformte Sandwichplatte ausgebildet ist, die an der Außenseite eine Dachhaut und an der Innenseite ein Polster- und/oder Bezugsmaterial als Dachhimmel aufweist. Durch die Vormontage werden die Montagezeiten am Endmontageband verkürzt. Allerdings sind noch rand-überdeckende äußere Abdeckleisten und die Holme des Dachrahmens von innen verkleidende Abdeckprofile zusätzlich anzubringen, was die Montagezeiten erhöht. Diese Abdeckprofile bieten darüber hinaus bei beispielsweise einem Unfall keinen Schutz vor Verletzungen, die durch ein Auftreffen von Körperteilen der Fahrzeuginsassen auf den Karosserierahmen entstehen können.

Weiterhin offenbart die FR-A-2 529 844 ein Dachteil für Fahrzeugkarosserien, das als selbsttragende Verkleidung ausgeführt ist. Die Verkleidung weist einen Bezugsstoff auf, dessen Innenseite mit Schaumstoff beschichtet ist. Die Randbereiche des Dachteils sind jeweils durch eine als Gelenk fungierende Verjüngung mit einem Mittelbereich des Dachteils verbunden, der an der Dachkonstruktion befestigt wird, so daß das Dachteil über mehrere bewegliche Seitenklappen verfügt. Die Seitenklappen dienen der Verkleidung des Karosserierahmens und ermöglichen verschiedene Nacharbeiten und mechanische Operationen (Überprüfung der Verkabelungen, Verdrahten, Austausch von Fenstern) ohne Beschädigungen oder Verschmutzungen des Fahrzeughimmels.

Der Erfindung liegt die Aufgabe zugrunde, ein einfach ausgebildetes Fahrzeugdach mit integriertem Dachhimmel zu schaffen, welches bei geringen Montagezeiten zu einer Erhöhung der passiven Sicherheit des Fahrzeugs beiträgt.

Die gestellte Aufgabe wird erfindungsgemäß durch die Merkmale des Patentanspruchs 1 gelöst. Vorteilhafte bzw. zweckmäßige Weiterbildungen der Erfindung sind Gegenstand der Patentansprüche 2 bis 4.

Gemäß der Erfindung ist bei einem Fahrzeugdach, insbesondere Kraftfahrzeugdach, das einteilig mit einem Dachhimmel ausgebildet, getrennt von der Fahrzeugkarosserie herstellbar, mit seinen Außenrändern auf einen Karosserierahmen auflegbar und mit diesem fest verbindbar ist, der Dachhimmel mit zur Verkleidung des Karosserierahmens ausgebildeten Bereichen versehen, an denen mindestens ein stoßabsorbierendes Sicherheitselement oder mindestens ein Airbag vormontiert ist, um ein Auftreffen von Körperteilen der Fahrzeuginsassen auf den Karosserierahmen zu verhindern bzw. die Folgen eines Auftreffens zu mildern, wobei der Dachhimmel durch eine Innenschale aus einem Schaumkunststoff, beispielsweise einem PUR-Schaumstoff gebildet ist, die eine obere Schicht und eine untere Schicht aufweist, von denen letztere die zur Verkleidung des Karosserierahmens ausgebildeten Bereiche bildet und für den Durchtritt durch die von dem Karosserierahmen begrenzte Karosserieöffnung nach unten umbiegbar ist.

Entsprechend dem Patentanspruch 2 ist vorgesehen, daß die untere Schicht der Innenschale in Teilbereichen dickwandiger ausgebildet ist, wobei diese Schichtverdickungen der unteren Schicht die stoßabsorbierenden Sicherheitselemente bilden.

In einer Weiterbildung der Erfindung gemäß dem Patentanspruch 3 sind zwischen der oberen Schicht und der unteren Schicht der Innenschale Hohlräume vorgesehen, die Luftkanäle ausbilden.

Nach der Lehre des Patentanspruchs 4 ist der Außenrand der zur Verkleidung des Karosserierahmens ausgebildeten Bereiche mit einem Flansch des Karosserierahmens durch einen Keder verbunden. Schließlich ist der Außenrand der zur Verkleidung des Karosserierahmens ausgebildeten Bereiche entsprechend ihrer am Karosserierahmen vorgesehenen Befestigung paßgerecht geschnitten oder vorgeformt.

Weitere Einzelheiten der Erfindung werden anhand der unterschiedliche Ausführungsformen darstellenden Zeichnungen näher erläutert. Darin zeigt:

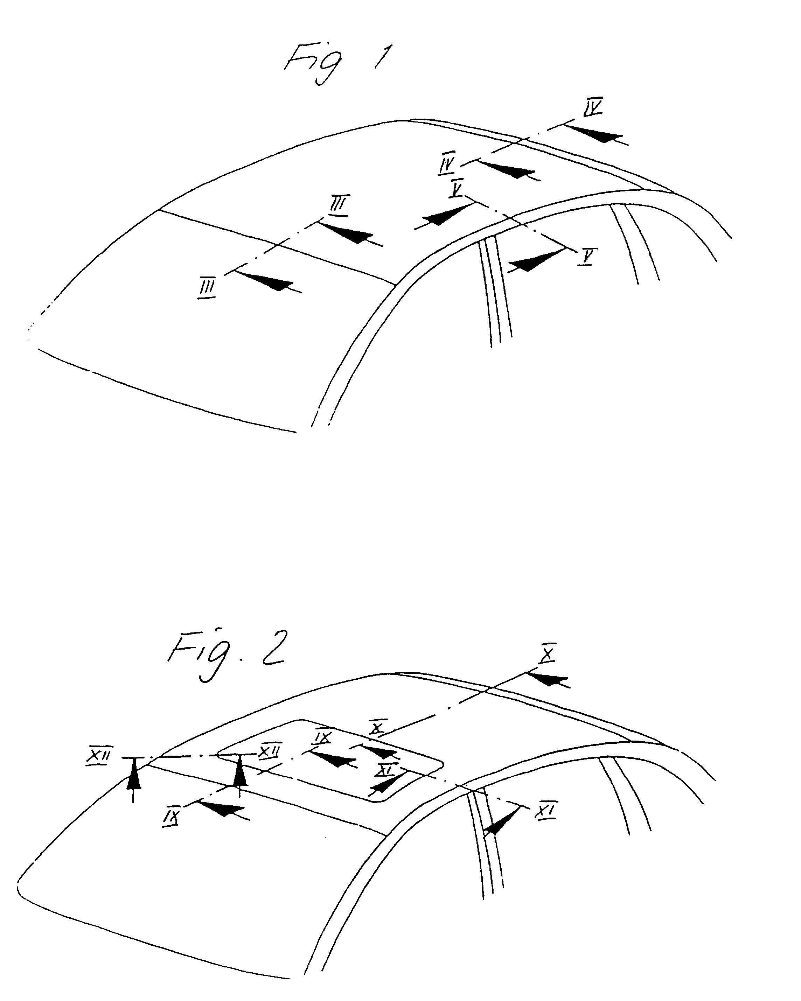

- Fig. 1: eine schematische Perspektivansicht eines schon an einer PKW-Karosserie angebrachten Fahrzeugdachs,
- Fig. 2: eine der Fig. 1 entsprechende Perspektivansicht, jedoch mit einer in das Fahrzeugdach eingebauten Schiebedacheinheit,
- Fig. 3: einen abgebrochenen Schnitt entsprechend der Linie III-III in Fig. 1 betreffend eine erste Ausführungsform,
- Fig. 4: einen abgebrochenen Schnitt entsprechend der Linie IV-IV in Fig. 1 betreffend die erste Ausführungsform,
- Fig. 5: einen abgebrochenen Schnitt entsprechend der Linie V-V in Fig. 1 betreffend die erste Ausführungsform,
- Fig. 6: einen der Fig. 3 ähnlichen Schnitt betreffend eine zweite Ausführungsform,
- Fig. 7: einen der Fig. 4 ähnlichen Schnitt betreffend die zweite Ausführungsform,
- Fig. 8: einen der Fig. 5 ähnlichen Schnitt betreffend die zweite Ausführungsform,
- Fig. 9: einen abgebrochenen Schnitt entsprechend der Linie IX-IX in Fig. 2 betreffend eine dritte Ausführungsform mit eingebautem Schiebedach,
- Fig. 10: einen abgebrochenen Schnitt entsprechend der Linie X-X in Fig. 2 betreffend die dritte Ausführungsform,
- Fig. 11: einen abgebrochenen Schnitt entsprechend der Linie XI-XI in Fig. 2 betreffend die dritte Ausführungsform,
- Fig. 12: einen abgebrochenen Schnitt entsprechend der Linie XII-XII in Fig. 2 betreffend die dritte Ausführungsform,
- Fig. 13: einen der Fig. 5 ähnlichen Schnitt betreffend eine nur mit dieser Fig. gezeigte vierte Ausführungsform,
- Fig. 14: einen der Fig. 5 ähnlichen Schnitt betreffend eine nur in den Fig. 14 und 15 gezeigte fünfte Ausführungsform,
- Fig. 15: einen der Fig. 14 ähnlichen Schnitt betreffend ein anderes Ausstattungsdetail der fünften Ausführungsform,
- Fig. 16A: eine das Montageverfahren erläuternde Perspektivdarstellung des Fahrzeugdachs vor dem Einbau,
- Fig. 16B: das Fahrzeugdach gemäß Fig. 16A, jedoch einbaufertig mit nach unten umgebogenen Bereichen des Dachhimmels bzw. der Innenschale und
- Fig. 16C: eine Perspektivansicht der PKW-Karosserie vor der Dachmontage.

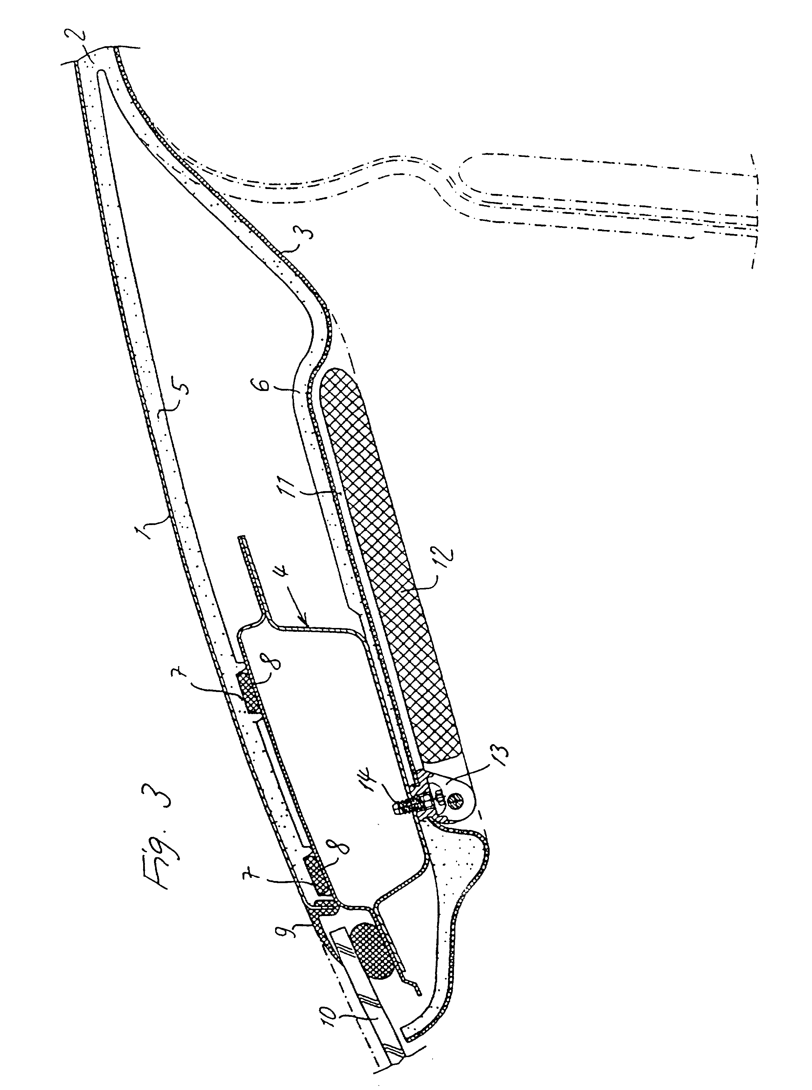

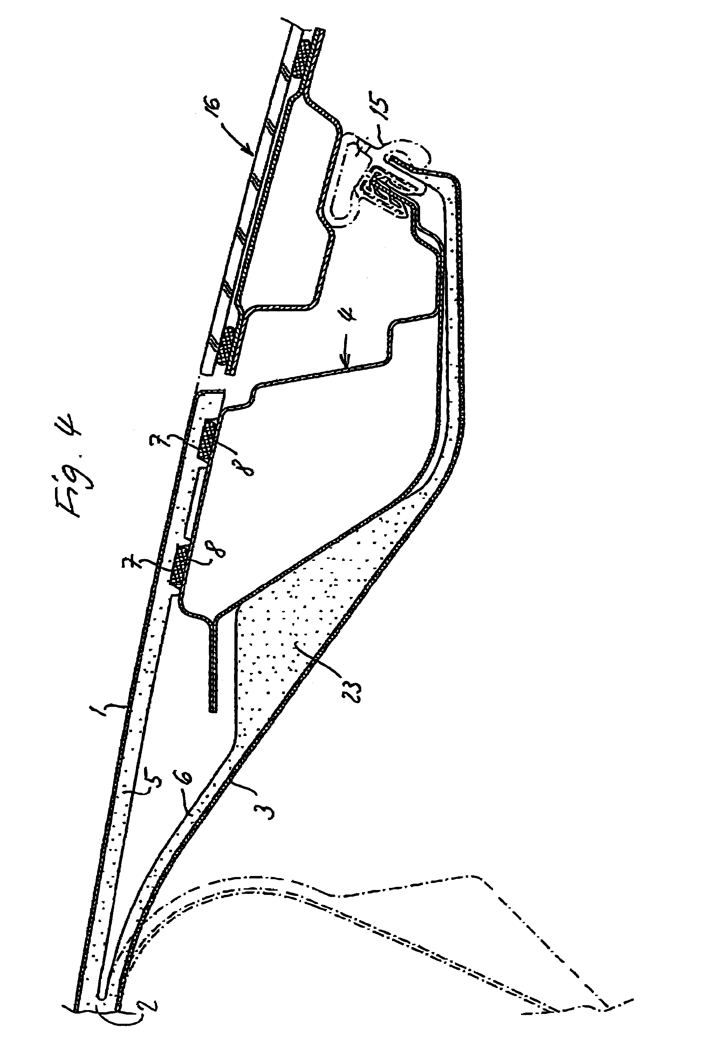

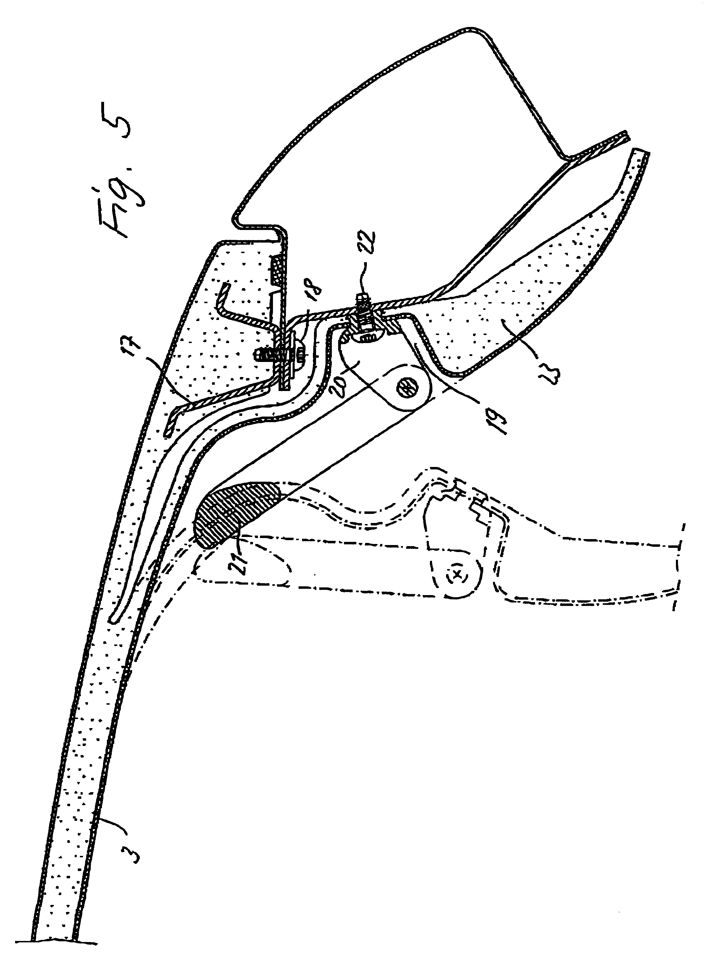

Zur näheren Erläuterung der ersten Ausführungsform des Fahrzeugdachs wird zunächst auf die Fig. 3 bis 5 Bezug genommen. Das daraus ersichtliche Fahrzeugdach besteht aus einer aus einem metallischen Werkstoff, z.B. Stahlblech geformten Außenschale oder Dachhaut 1 und einer damit sandwichartig verbundenen Innenschale 2, die aus einem Schaumkunststoff, beispielsweise einem PUR-Schaumstoff gebildet ist. Die Innenfläche der Innenschale 2 ist zur Ausbildung des Dachhimmels mit einem textilen oder folienartigen Bezugsmaterial 3 beschichtet. Wie bei allen hier gezeichneten und beschriebenen Schnittdarstellungen ist der Einbauzustand des Fahrzeugdachs dargestellt, bei dem die Außenränder des Dachs auf den Karosserierahmen 4 aufgelegt sind. In Fig. 3 ist der vordere Querholm, in Fig. 4 der hintere Querholm und in Fig. 5 einer der Seitenholme des Karosserierahmens 4 dargestellt.

Die Innenschale 2 ist im Bereich der zur Auflage auf den Karosserierahmen 4 vorgesehenen Außenränder in zwei Schichten aufgeteilt, von denen die obere Schicht 5 auf den Karosserierahmen 4 aufgelegt ist, während die untere Schicht 6 über die Außenränder des Fahrzeugdachs übersteht. Die untere Schicht 6 ist für den Durchtritt durch die von dem Karosserierahmen 4 begrenzte Karosserieöffnung nach unten ohne bleibende Deformation umbiegbar, wie das in den Fig. in strichpunktierten Linien angedeutet ist. Diese nach unten umbiegbare untere Schicht 6 ist an die nach unten bzw. innen weisenden Flächen des Karosserierahmens 4 angelegt und auf noch zu beschreibende Weise befestigt.

Die obere Schicht 5 ist im Bereich ihrer Auflage auf den Karosserierahmen 4 mit in den Schaumstoff eingeformten Aufnahmenuten 7 für Klebstoff 8 versehen. Auf diese Weise ist das Fahrzeugdach fest mit dem Karosserierahmen 4 verbunden. Im vorderen Bereich ist auf eine Abkantung der Außenschale 1 ein Lippenprofil 9 aufgesteckt, das der Windschutzscheibe 10 anliegt. Die untere Schicht 6 verkleidet den Karosserierahmen 4 vollständig und ist in ihrem vorderen Bereich mit Vertiefungen 11 versehen, welche schwenkbare Sonnenblenden 12 aufnehmen. Die Schwenklagerböcke 13 der Sonnenblenden 12 sind in entsprechende Ausnehmungen in der unteren Schicht 6 und dem Bezugsmaterial 3 verrastet, was eine Vormontage der Sonnenblenden an der Innenschale ermöglicht. Nach dem Verkleiden des Karosserierahmens 4 werden durch die Schwenklagerböcke hindurch Befestigungsschrauben 14 in den Karosserierahmen 4 eingeschraubt.

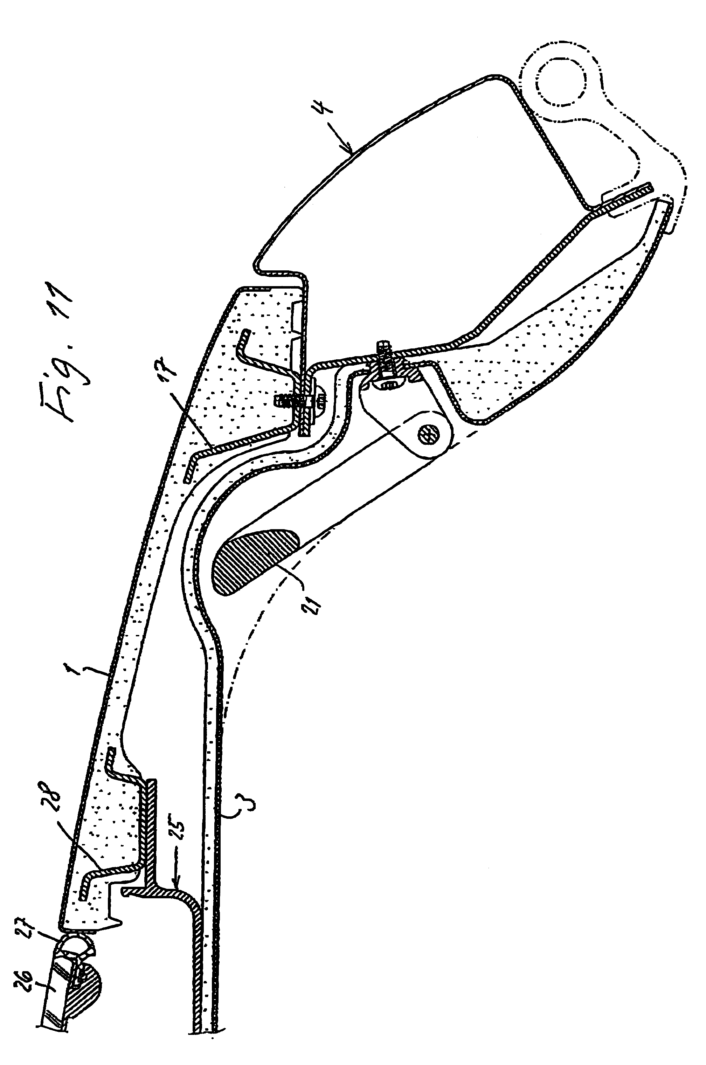

An den aus Fig. 4 ersichtlichen hinteren Querholm des Karosserierahmens 4 ist die untere Schicht 6 angelegt und mit diesem über einen sowohl auf einen Flansch des Querholms als auch auf den Außenrand der unteren Schicht 6 aufgesteckten Keder 15 fest verbunden. Der in Fig. 4 in strichpunktierten Linien dargestellte Keder ist zugleich das Abdichtprofil für die bei diesem Ausführungsbeispiel vorgesehene Heckklappe 16. Wie aus Fig. 5 hervorgeht, ist an den Seiten des Fahrzeugdachs in die obere Schicht 5 ein Verstärkungsteil 17 in Form eines durchgehenden Profils in den Schaumstoff eingebettet. Die untere Fläche des Verstärkungsteils 17 liegt dem Karosserierahmen unmittelbar flächig an. Hier ist das Fahrzeugdach mit den Seitenholmen des Karosserierahmens durch Befestigungsschrauben 18 fest verbunden, die durch einen Flansch des Karosserierahmens 4 hindurchgeführt und in das Verstärkungsteil 17 eingeschraubt sind. Diese Befestigung erfolgt vor der Verkleidung des Karosserierahmens 4 mit der unteren Schicht 6 der Innenschale 2, die auch in Fig. 5 in strichpunktierten Linien nach unten umgebogen dargestellt ist. Außen ist in den Schaumstoff der oberen Schicht 5 zusätzlich eine Aufnahmenut 7 für Klebstoff 8 angebracht. In Fig. 5 ist auch noch dargestellt, daß in Vertiefungen 19 der unteren Schicht 6 Schwenklagerböcke 20 für Haltegriffe 21 in entsprechende Bohrungen der unteren Schicht 6 und des Bezugsmaterials 3 eingerastet sind. Auch die Haltegriffe 21 mit ihren Schwenklagerböcken 20 können daher an dem Fahrzeugdach vormontiert werden. Wie unter Bezugnahme auf Fig. 3 anhand der dort gezeigten Sonnenblenden 12 schon beschrieben wurde, werden auch bei den Haltegriffen 21 Befestigungsschrauben 22 durch die Schwenklagerböcke 20 hindurchgeführt und in den Karosserierahmen 4 eingeschraubt. Zusätzlich zu dieser Befestigung wird noch der Außenrand der unteren Schicht 6 mit einem entsprechenden Flansch des Karosserierahmens 4 durch einen hier nicht gezeigten Keder verbunden, wie er in strichpunktierten Linien in Fig. 11 an dieser Stelle angedeutet ist.

Wie aus den Fig. 3 bis 5 weiterhin hervorgeht, ist die untere Schicht 6 nicht durchweg von gleichbleibender Dicke ausgeführt, sondern entsprechend dem Stabilitäts- bzw. Polsterungsbedürfnis auch in Teilbereichen dickwandiger ausgebildet. Durch entsprechende Ausbildung der Fertigungsform lassen sich derartige unterschiedliche Schichtdicken ohne weiteres erzielen. Weiterhin ist aus den Fig. ersichtlich, daß sich zwischen der oberen Schicht 5 und der unteren Schicht 6 der Innenschale 2 zum Teil erhebliche Hohlräume befinden. Diese können als Kanäle für die Unterbringung von Kabeln, aber auch als Luftkanäle verwendet werden. Die Außenränder der nach unten umbiegbaren Bereiche der Innenschale 2 d.h. der unteren Schicht 6 bei der in Rede stehenden Ausführungsform sind entsprechend ihrer am Karosserierahmen 4 vorgesehenen Befestigung paßgerecht geschnitten bzw. vorgeformt. Die bereits erwähnten Schichtverdickungen der unteren Schicht 6 bilden, wie aus den Fig. 4 und 5 besonders deutlich hervorgeht, stoßabsorbierende Sicherheitselemente 23, die in diesen Bereichen ein direktes Auftreffen von Körperteilen der Fahrzeuginsassen auf den Karosserierahmen 4 verhindern bzw. die Folgen eines Auftreffens mildern.

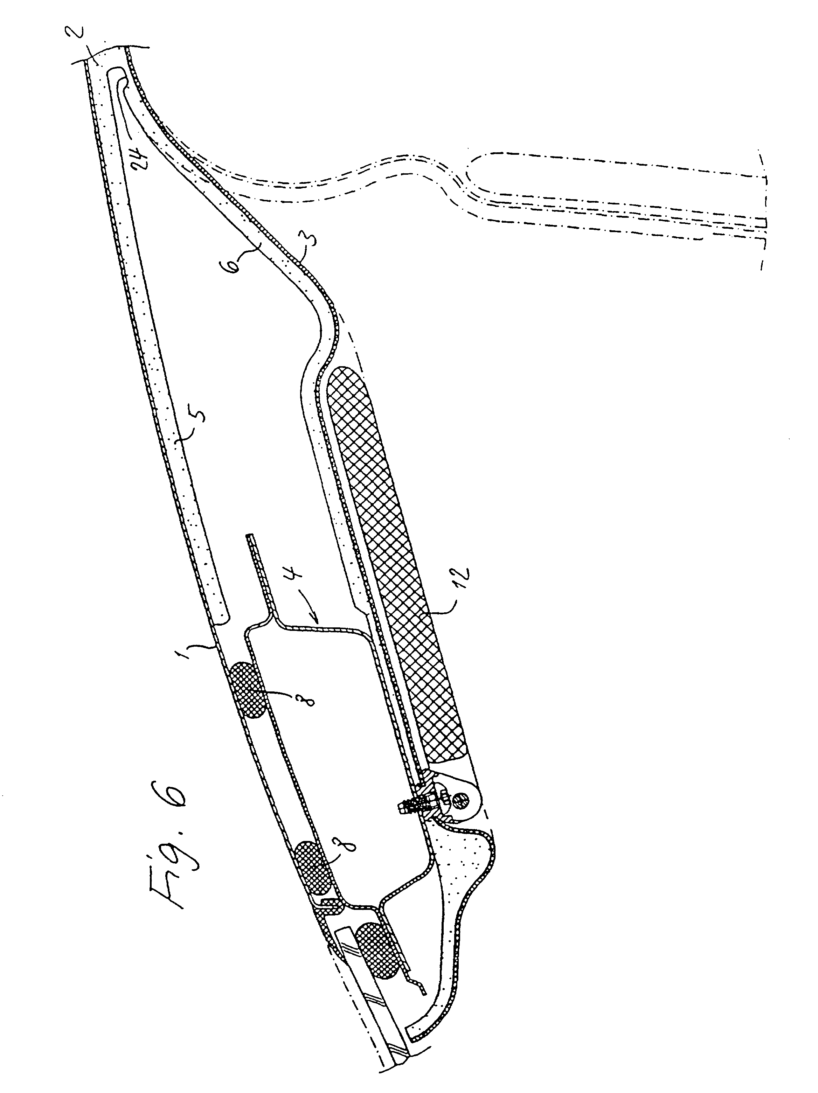

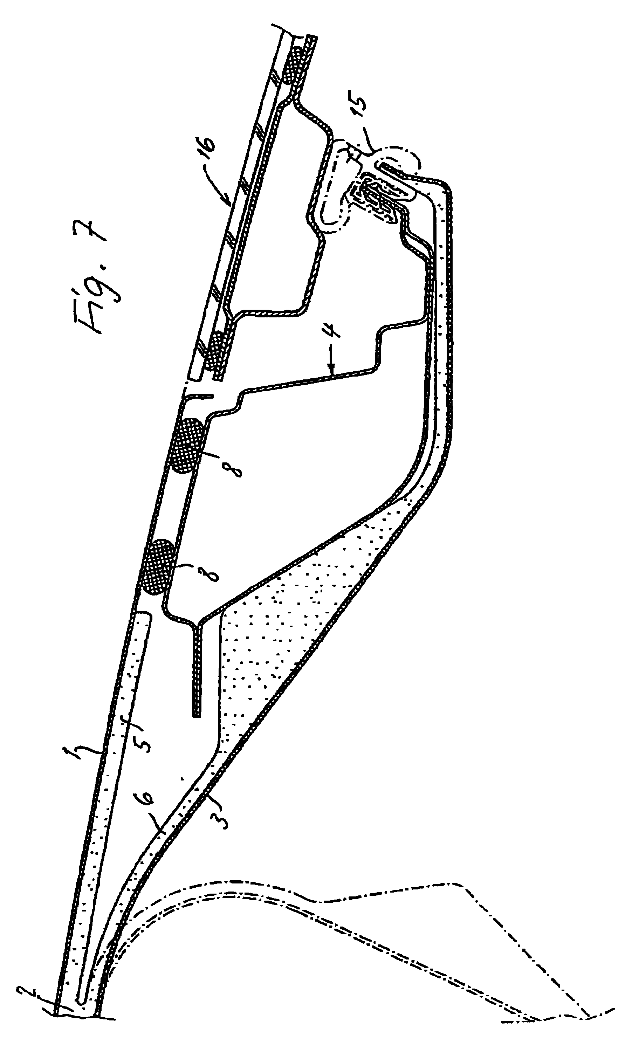

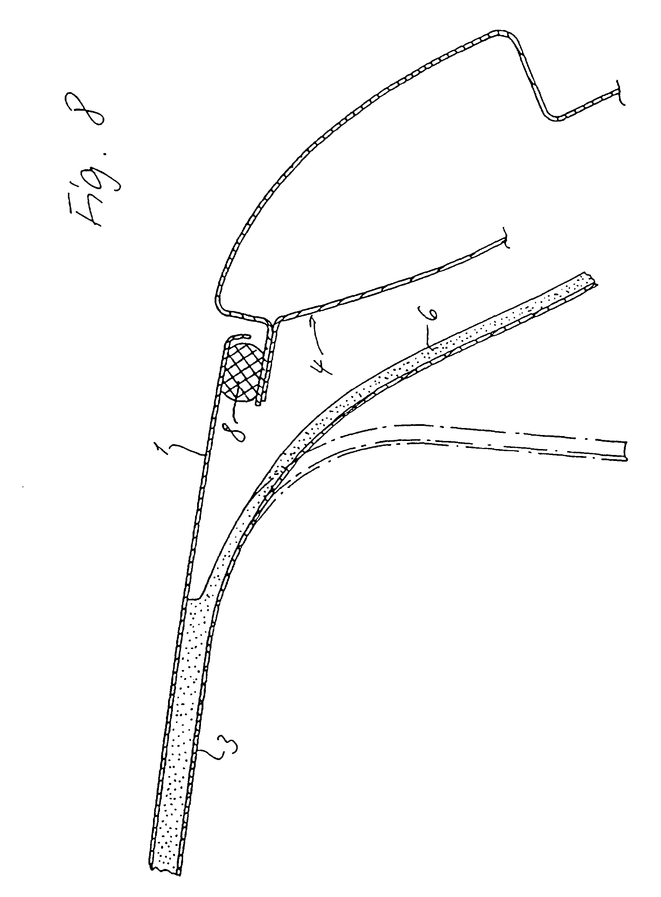

Zur näheren Erläuterung der zweiten Ausführungsform wird nunmehr auf die Fig. 6 bis 8 Bezug genommen, wobei aber lediglich die zur ersten Ausführungsform gemäß der Fig. 3 bis 5 bestehenden Unterschiede hingewiesen werden soll. Während bei der ersten Ausführungsform die Innenfläche der Dachhaut 1 vollständig ausgeschäumt ist, befindet sich bei der zweiten Ausführungsform im Bereich der zur Auflage auf den Karosserierahmen 4 bestimmten Außenränder der starren Dachhaut 1 keine Ausschäumung. Die obere Schicht 5 endet vorn und hinten (Fig. 6 und 7) mit Abstand vor den Außenrändern des Fahrzeugdachs, kann in diesem Bereich aber auch völlig fehlen, so daß aus der Innenschale 2 lediglich eine dünnere untenliegende Schicht 6 weitergeführt ist, wie das aus Fig. 8 hervorgeht. Jedenfalls ist die unterhalb der Dachhaut 1 befindliche Innenschale im Bereich der Auflage auf den Karosserierahmen 4 nicht mit der Dachhaut 1 verbunden. Die über die Außenränder des Fahrzeugdachs überstehende Innenschale ist wiederum für den Durchtritt durch die von dem Karosserierahmen 4 begrenzte Karosserieöffnung nach unten ohne bleibende Deformation umbiegbar und dient der bereits beschriebenen Verkleidung des Karosserierahmens 4. Während im ersten Ausführungsbeispiel gemäß der Fig. 3 bis 5 eine feste Dachhaut 1 nicht unbedingt erforderlich ist, wenn die Innenschale 2 genügend Formstabilität aufweist, ist bei dem Ausführungsbeispiel nach den Fig. 6 bis 8 eine starre tragende Dachhaut 1 zwingend erforderlich. Die Verbindung der Dachhaut 1 und damit des gesamten Fahrzeugdachs mit dem Karosserierahmen 4 übernimmt auch hier in Raupen aufgetragener Klebstoff 8. Bei dieser zweiten Ausführungsform ist in Fig. 6 an der Teilungsstelle von oberer Schicht 5 und unterer Schicht 6 angedeutet, daß an den Umbiegungs- oder Knickstellen auf der der Himmelfläche abgelegenen Seite kerbenähnliche Vertiefungen 24 vorgesehen sein können, welche das vorübergehende Abbiegen der unteren Schicht 6 wesentlich erleichtern. Entsprechende Vertiefungen können auch bei den anderen Ausführungsformen vorgesehen sein.

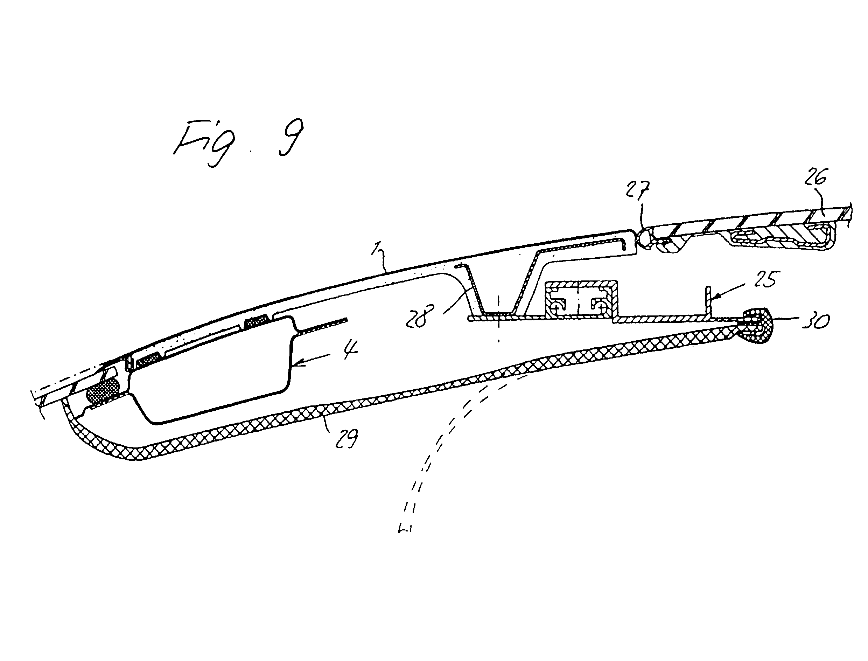

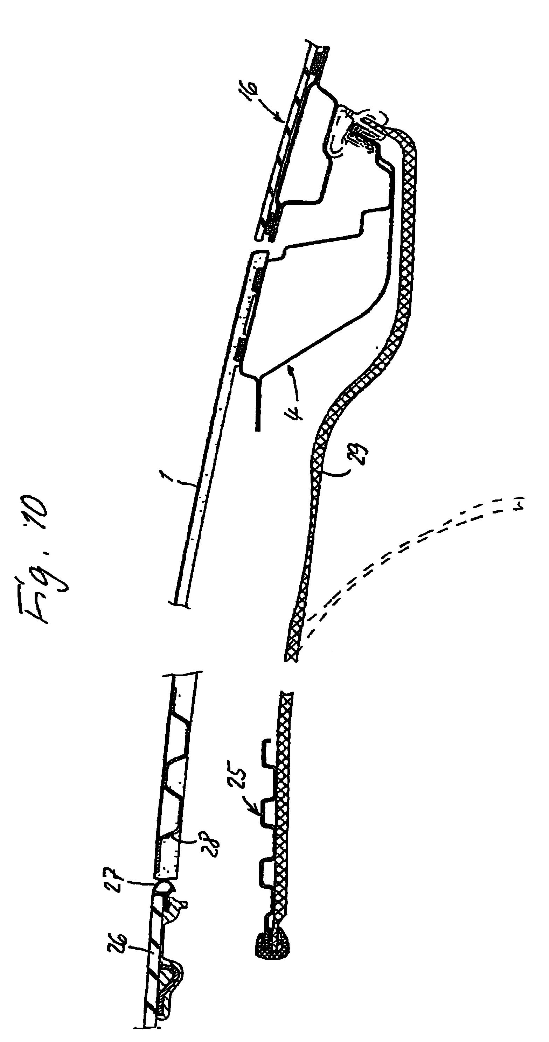

Die dritte Ausführungsform wird nunmehr anhand der Fig. 9 bis 12 näher beschrieben. Die Besonderheit dieser Ausführungsform besteht darin, daß sich in dem Fahrzeugdach eine vormontierte Schiebedacheinheit befindet. Von dieser sind in den genannten Fig. im wesentlichen der Schiebedachrahmen 25, der beispielsweise als Glasdeckel ausgebildete Schiebedeckel 26, das Randspaltabdichtungsprofil 27 und ein die in der festen Dachhaut 1 angebrachte Dachöffnung umgebender Verstärkungsrahmen 28 dargestellt. Im gezeichneten Beispiel ist die feste Dachhaut 1 ausgeschäumt und auf die schon beschriebene Weise mit ihren Randbereichen auf den Karosserierahmen 4 aufgelegt und damit fest verbunden. Bei dieser dritten Ausführungsform ist der als Innenschale 29 vorgeformte Dachhimmel mit Abstand zu der starren Dachhaut 1 an dem unterhalb der Dachhaut 1 befestigten Schiebedachrahmen 25 angebracht. Die wiederum über die Außenränder des Fahrzeugdachs überstehende Innenschale 29 ist für den Durchtritt durch die von dem Karosserierahmen 4 begrenzte Karosserieöffnung nach unten ohne bleibende Deformation umbiegbar und zur Verkleidung des Karosserierahmens 4 und des Schiebedachrahmens 25 ausgebildet. Während die Anbringung und Befestigung der Innenschale 29 an dem Karosserierahmen 4 auf die schon beschriebene Weise erfolgt, übernimmt die Befestigung der Innenschale 29 an dem Schiebedachrahmen 25 ein Aufsteckkeder 30, der sowohl auf einen Flansch des Schiebedachrahmens 25 als auch auf den Öffnungsrand der Innenschale 29 aufgesteckt ist, wie das aus den Fig. 9, 10 und 12 hervorgeht. In diesen Fig. ist auch die nach unten umgebogene Montagelage der Innenschale 29 in strichpunktierten Linien dargestellt. Während in den Fig. 9, 10 und 12 durch Weglassen des Bezugsmaterials 3 angedeutet ist, daß die Innenschale 29 an ihrer dem Fahrzeuginnenraum zugekehrten Fläche auch ohne Bezugsmaterial ausgeführt sein kann, veranschaulicht die zu dieser dritten Ausführungsform gehörende Fig. 11 aber, daß auch hier Bezugsmaterial 3 vorhanden sein kann.

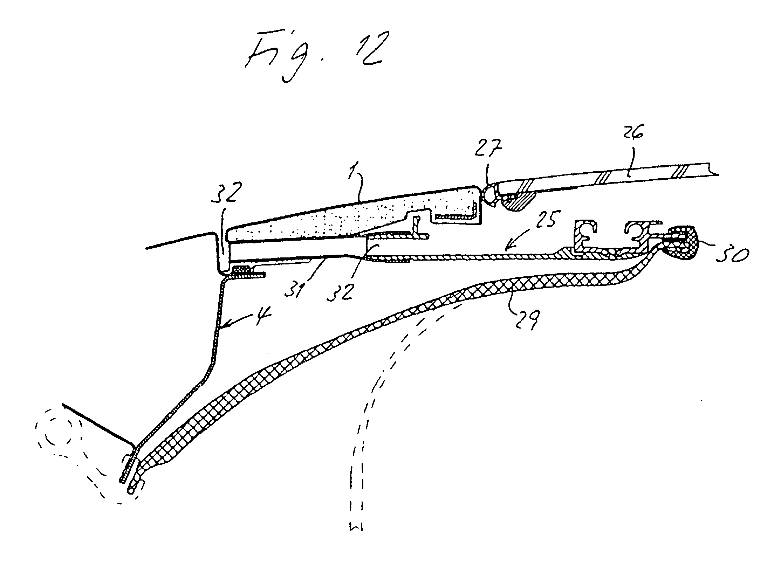

Aus Fig. 12 geht hervor, auf welche Weise über den Randspalt zwischen der festen Dachhaut 1 und dem Schiebedeckel 26 eintretendes und von dem Schiebedachrahmen 25 aufgefangenes Wasser nach außen abgeleitet werden kann. Zu diesem Zweck ist in der an der Unterseite der festen Dachhaut 1 angebrachten Schaumschicht ein Schlauch- oder Rohrstück 31 eingebettet, das einerseits auf eine Abflußtülle 32 des Schiebedachrahmens 25 dicht aufgesteckt ist und andererseits mit einer Öffnung an der Außenkante des Fahrzeugdachs endet. Hier mündet das Schlauchoder Rohrstück 31 in eine Wasserablauffuge 32, die zwischen dem Außenrand der Dachhaut und der ihm zugekehrten Fläche des Karosserierahmens 4 gebildet ist.

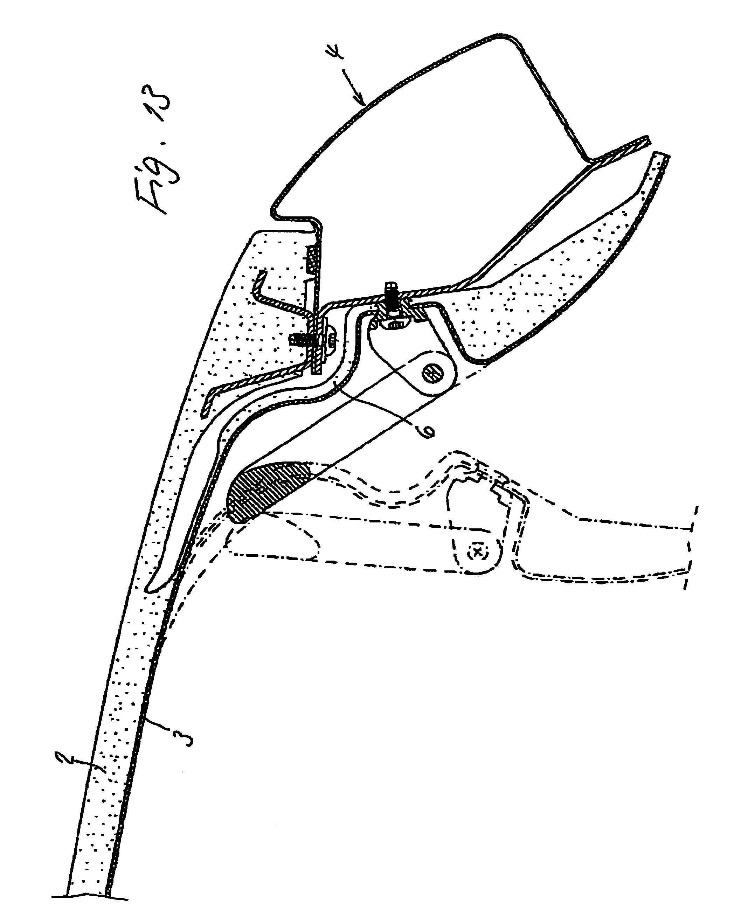

Die vierte Ausführungsform, die in Fig. 13 dargestellt ist, entspricht im wesentlichen der schon unter Bezugnahme auf die Fig. 3 bis 5 ausführlich beschriebenen ersten Ausführungsform. Im Unterschied dazu besitzt die vierte Ausführungsform keine feste Dachhaut. Hier besteht das Fahrzeugdach im wesentlichen aus einem harten schalenförmig geformten Schaumkunststoff mit glatter lackierbarer Außenfläche. Selbstverständlich können in den Schaumkunststoff noch zusätzliche in Querrichtung aber auch in Längsrichtung geführte Verstärkungen eingebettet sein. Die Innenschale 2 ist zugleich Außenschale.

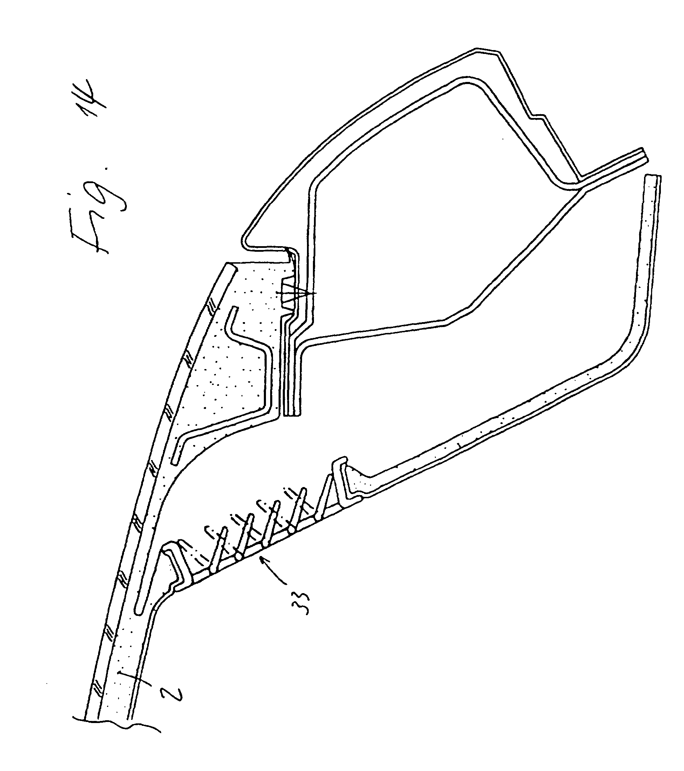

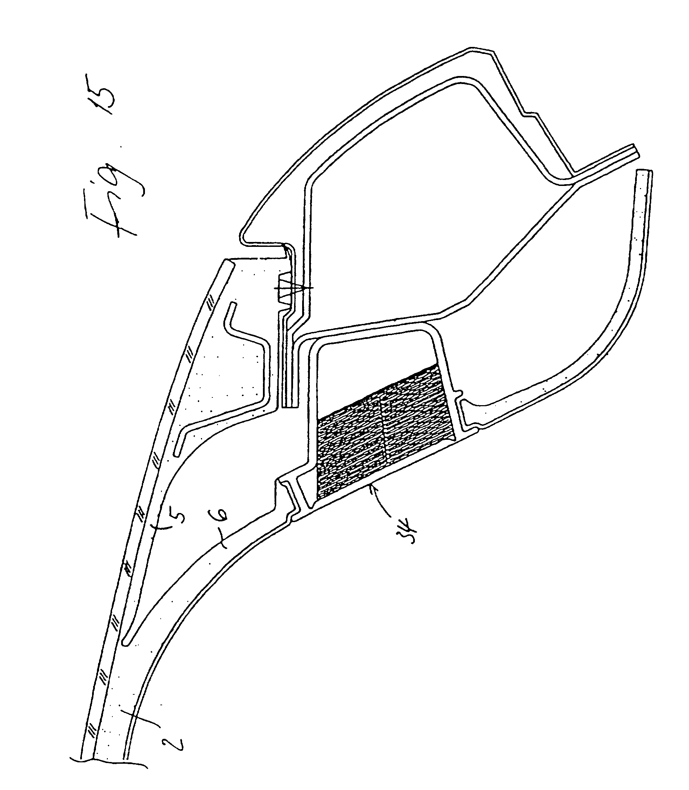

Die fünfte Ausführungsform schließlich ist den Fig. 14 und 15 zu entnehmen. Die fünfte Ausführungsform unterscheidet sich nicht grundsätzlich von der mit Bezug auf die Fig. 3 bis 5 beschriebenen ersten Ausführungsform, mit der Ausnahme, daß hier die dünne Dachhaut 1 ersetzt ist durch eine dickere aus einem transparenten Kunststoff oder Glas gebildete Dachhaut. In diesen Fig. ist aber auch dargestellt, daß an der unteren Schicht 6 nicht nur Air-bags 34 (Fig. 15) und Sonnenblenden oder Haltegriffe vormontiert werden können, sondern auch Lüftungsgitter 33 (Fig. 14). Entsprechendes gilt auch für die mit Bezug auf die Fig. 9 bis 12 beschriebene dritte Ausführungsform. Hierbei sind dann die stoßabsorbierenden Sicherheitselemente oder Airbags sowie andere vormontierte Elemente wie Sonnenblenden, Haltegriffe, Lüftungsgitter and dgl. an der Innenschale 29 vormontiert.

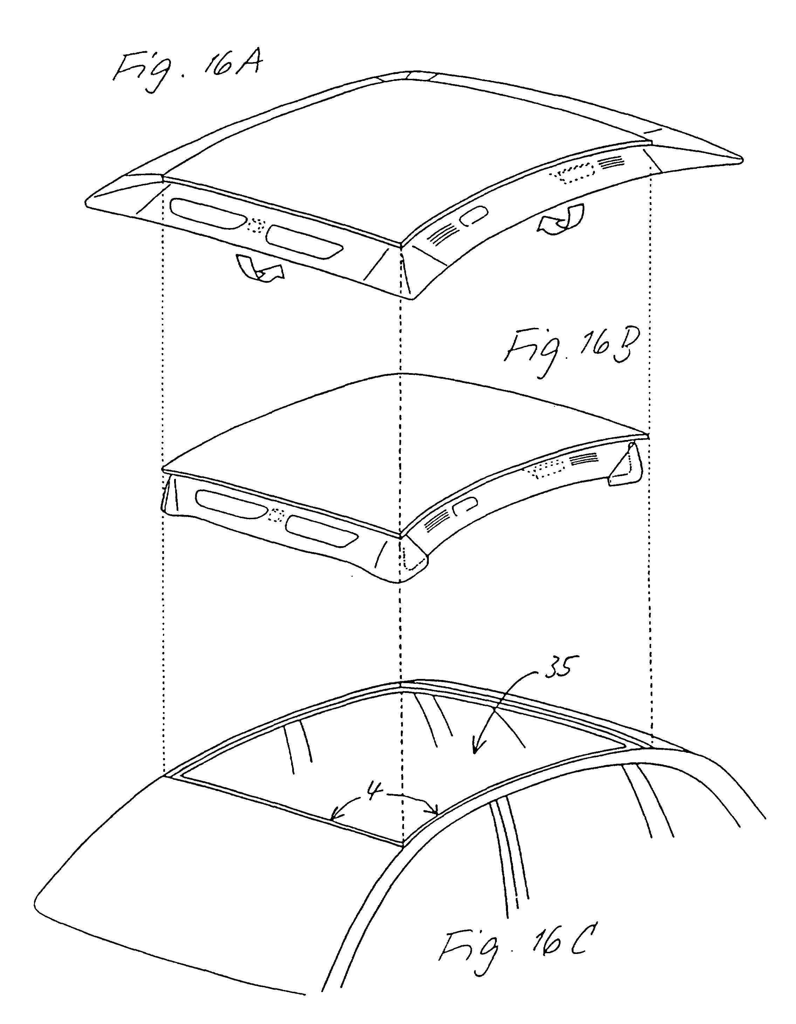

Das Montageverfahren für das beschriebene Fahrzeugdach, das für alle Ausführungsformen des Fahrzeugdachs gleich ist, wird nachfolgend anhand der Fig. 16A bis 16C beschrieben. Das getrennt von der übrigen Fahrzeugkarosserie hergestellte Fahrzeugdach mit allen seinen an der Innenschale vormontierten Elementen hat zunächst etwa das in Fig. 16A dargestellte Aussehen. Deutlich sind die über den Außenrand des Fahrzeugdachs vorstehenden Bereiche der Innenschale zu erkennen. Nunmehr wird die über die Außenränder des Fahrzeugdachs überstehende Innenschale bzw. die untere Schicht der Innenschale unter partieller Faltung in den Eckbereichen nach unten umgebogen, wie das Pfeile in Fig. 16A verdeutlichen. Hierbei erfolgt eine nichtbleibende Deformation und in den Eckbereichen auch eine partielle Faltung der überstehenden Innenschale bzw. der unteren Schicht der Innenschale. Danach hat das Fahrzeugdach etwa die in Fig. 16B dargestellte Form eingenommen. Zur Erleichterung des Einführens der nun gewissermaßen schürzenähnlich herabhängenden Bereiche der Innenschale bzw. der unteren Schicht der Innenschale in die von dem Karosserierahmen 4 gebildete Karosserieöffnung 35 können die herabhängenden Bereiche und damit die umgebogene Lage dieser Bereiche vorübergehend durch ein umfänglich herumgelegtes Band, eine Schnur od. dgl. fixiert werden. Nach dem Aufsetzen des Fahrzeugdachs auf den Karosserierahmen 4 erfolgt zunächst die Befestigung des Fahrzeugdachs am Karosserierahmen, wobei die vorübergehende Fixierung noch beibehalten werden kann. Danach wird die Fixierung ggf. aufgehoben, die Innenschale bzw. die untere Schicht der Innenschale mit ihren zur Verkleidung des Karosserierahmens 4 ausgebildeten Bereichen zurückgebogen, an die nach unten bzw. innen weisenden Flächen des Karosserierahmens angelegt und schließlich ebenfalls am Karosserierahmen befestigt, wie das im einzelnen anhand der Schnittdarstellungen erläutert worden ist.

Entsprechend dem beschriebenen Verfahren zur Montage des Fahrzeugdachs an einem Karosserierahmen ist also vorgesehen, daß
(a) die über die Außenränder des Fahrzeugdachs überstehende Innenschale bzw. die untere Schicht der Innenschale unter partieller Faltung in den Eckbereichen nach unten umgebogen wird,
(b) das Fahrzeugdach unter Durchtritt der umgebogenen Bereiche der Innenschale durch den Karosserierahmen 4 hindurch mit seinen Außenrändern von oben dem Karosserierahmen 4 aufgelegt und daran befestigt wird, und
(c) die Innenschale mit ihren zur Verkleidung des Karosserierahmens 4 ausgebildeten Bereichen zurückgebogen, an die nach unten bzw. innen weisenden Flächen des Karosserierahmens 4 angelegt und dann am Karosserierahmen 4 befestigt wird.

Das Montageverfahren läßt sich dabei noch weiter dadurch verbessern, daß die umgebogene Lage der davon betroffenen Bereiche der Innenschale vorübergehend fixiert wird und die Fixierung nach Durchtritt der umgebogenen Bereiche durch den Karosserierahmen 4 und Befestigung des Fahrzeugdachs an dem Karosserierahmen 4 aufgehoben wird. Für die vorübergehende Fixierung ist es beispielsweise ausreichend, wenn die nach unten umgebogenen Bereiche der Innenschale durch ein um diese Bereiche von außen herumgelegtes flexibles Band oder ein Seil od. dgl. zusammengeschnürt werden.

Allen beschriebenen Ausführungsformen des Fahrzeugdachs ist gemeinsam, daß das Fahrzeugdach mit einer vorgeformten den Dachhimmel bildenden Innenschale 2 ausgebildet ist mit der Besonderheit, daß diese über die Außenränder des Fahrzeugdachs allseits übersteht, auch an den Ecken, d.h. größer ist als die Innenabmessungen der von den Holmen oder Profilen des geschlossenen Karosserierahmens 4 begrenzten Karosserieöffnung 35, und daß der Dachhimmel an den überstehenden Bereichen so flexibel oder elastisch ist, daß er für den Durchtritt durch die von dem Karosserierahmen 4 begrenzte Karosserieöffnung 35 unter partieller Faltung in den Eckbereichen nach unten ohne bleibende Deformation umbiegbar und zur Verkleidung des Karosserierahmens 4 ausgebildet ist. Die überstehenden Bereiche des Dachhimmels bilden somit die Verkleidungen für die Dachrahmenprofile, so daß zusätzliche Abdeckleisten und Abdeckprofile auch an den Ecken nicht erforderlich sind. Das getrennt hergestellte Fahrzeugdach bringt in einteiliger Ausbildung schon alle Elemente mit, die nach dem Aufsetzen und Befestigen des Fahrzeugdachs auf den bzw. an dem Karosserierahmen 4 zur Verkleidung der Sichtflächen des Karosserierahmens 4 erforderlich sind. Dabei geht der eigentliche Dachhimmel fugenlos in seine der Dachrahmenverkleidung dienenden Bereiche über. Infolge der Einteiligkeit des modulartig getrennt hergestellten Fahrzeugdachs mit den Verkleidungsbereichen seines Himmels werden daher nicht nur kurze Montagezeiten am Endmontageband ermöglicht, sondern darüber hinaus eine fugenlose harmonische Gestaltung des gesamten Dachhimmels auch in seinen Übergangsflächen zu den verglasten Flächen der Kraftfahrzeugkarosserie, d.h. zu der Windschutzscheibe, den Seitenfenstern und dem Heckfenster, und auch in seinen Eckbereichen erzielt.

Das Fahrzeugdach, bei dem die Innenschale 2 im Bereich der zur Auflage auf den Karosserierahmen 4 vorgesehenen Außenränder in zwei Schichten 5, 6 aufgeteilt ist, von denen die obere Schicht 5 auf den Karosserierahmen 4 auflegbar ist, während die untere Schicht 6 über die Außenränder des Fahrzeugdachs übersteht, für den Durchtritt durch die von dem Karosserierahmen 4 begrenzte Karosserieöffnung 35 unter partieller Faltung in den Eckbereichen nach unten ohne bleibende Deformationen umbiegbar und zur Verkleidung des Karosserierahmens 4 ausgebildet ist (Fig. 3 bis 5 und 13), ist in zwei Ausführungsformen möglich. Zum einen kann es mit einer äußeren Dachhaut 1, vorzugsweise einer starren Dachhaut, die beispielsweise aus Stahlblech geformt ist, versehen sein (Fig. 3 bis 5), zum anderen kann es aus einem geeigneten Hartschaum ohne äußere Dachhaut geformt sein (Fig. 13). Im letzteren Fall läßt sich die Außenseite so lackieren wie Karosserieblech.

Das Fahrzeugdach, bei dem die Innenschale 2 außen mit einer starren Dachhaut 1 versehen ist, deren Außenränder zur Auflage auf den Karosserierahmen 4 vorgesehen sind, während die unterhalb der Dachhaut 1 befindliche Innenschale 2 im Bereich der Auflage auf den Karosserierahmen 4 nicht mit der Dachhaut 1 verbunden ist, über die Außenränder des Fahrzeugdachs übersteht, für den Durchtritt durch die von dem Karosserierahmen 4 begrenzte Karosserieöffnung 35 unter partieller Faltung in den Eckbereichen nach unten ohne bleibende Deformationen umbiegbar und zur Verkleidung des Karosserierahmens 4 ausgebildet ist (Fig. 6 bis 8), setzt dagegen das Vorhandensein einer starren Dachhaut 1 voraus, deren Außenränder unmittelbar, d.h. ohne zwischenliegende Schaumschicht, auf den Dachrahmen auflegbar und daran zu befestigen sind.

Das Fahrzeugdach, bei dem der als Innenschale 29 vorgeformte Dachhimmel mit Abstand zu einer starren Dachhaut 1 an einem unterhalb der Dachhaut befestigten Schiebedachrahmen 25 angebracht ist, über die Außenränder des Fahrzeugdachs übersteht, für den Durchtritt durch die von dem Karosserierahmen 4 begrenzte Karosserieöffnung 35 unter partieller Faltung in den Eckbereichen nach unten ohne bleibende Deformationen umbiegbar und zur Verkleidung des Karosserierahmens 4 und des Schiebedachrahmens 25 ausgebildet ist (Fig. 9 bis 12), kann schließlich mit einer bereits funktionsfähig vormontierten Schiebedacheinheit versehen sein. Der als Innenschale 29 vorgeformte Dachhimmel ist hierbei an der Unterseite des Schiebedachrahmens 25 befestigt. Die Innenfläche der Dachhaut 1 kann in den an die Schiebedachöffnung angrenzenden Bereichen zur Verbesserung der Schall- und Wärmeisolation zusätzlich mit Schaumstoff beschichtet sein.

Für die Formung der Innenschale 2, 29 eignen sich PUR-Schaumstoffe, die für die vorliegenden Zwecke ausreichend flexibel oder sogar elastisch einstellbar sind. Sollknickstellen, die das vorübergehende Umbiegen nach unten und die Faltung an den vier Ecken des Fahrzeugdachs erleichtern, können vorgesehen sein. So kann die aus einem PUR-Schaumstoff geformte Innenschale 2, 29 an den Umbiegungs- oder Knickstellen auf der der Himmelfläche abgelegenen Seite mit kerbenähnlichen Vertiefungen 24 versehen sein (Fig. 6). Für diejenigen Bereiche der Innenschale 2, für die eine Flexibilität nicht erforderlich ist, können auch härtere Schaumstoffe zur Anwendung gelangen. Dies gilt insbesondere für den Fall, daß das Fahrzeugdach keine starre tragende Außenhaut 1 aufweist.

Weiterhin können die nach unten umbiegbaren Bereiche der Innenschale 2, 29 an den dafür geeigneten Orten neben stoßabsorbierenden Sicherheitselementen 23 (Fig. 4 und 5') oder Airbags 34 (Fig. 15) mit mindestens einem weiteren vormontierten Element aus der aus Sonnenblenden 12 (Fig. 3 und 6), Haltegriffen 21 (Fig. 5 und 11), Lüftungsgittern 33 (Fig. 14), Innenleuchten und dgl. bestehenden Gruppe bzw. mit vorbereiteten Anbringungsorten für mindestens eines dieser Elemente versehen sein. Hierdurch wird der Montageaufwand am Montageband noch weiter vereinfacht, weil sich entweder die betreffenden Elemente leicht an dafür vorgesehenen Stellen anbringen lassen oder sogar schon an dem modulartigen Fahrzeugdach vormontiert vorhanden sind.

Im Interesse einer möglichst umfassenden Vorfertigung des Fahrzeugdachs ohne das Erfordernis nachträglicher Anpassungsarbeiten an den Karosserierahmen 4 können vorteilhaft die Außenränder der nach unten umbiegbaren Bereiche der Innenschale 2, 29 zur Befestigung an Flanschrändern des Karosserierahmens 4 mittels Kunststoffprofilstreifen, Keder od. dgl. 15 entsprechend paßgerecht beschnitten bzw. vorgeformt sein (Fig. 4 und 7). Ein so vorbereitetes Fahrzeugdach kann an allen vier Seiten ohne weiteres mit dem Karosserierahmen 4 vereinigt werden.

Soll das Fahrzeugdach ausschließlich oder zusätzlich zu Schraubverbindungen durch Kleben mit dem Karosserierahmen 4 vereinigt werden, so sind die Dachränder zweckmäßig so zu gestalten, daß sie in ihren zur Auflage auf den Karosserierahmen 4 vorgesehenen Bereichen mit im Schaumstoff eingeformten Aufnahmenuten 7 für Klebstoff versehen sind (Fig. 3 und 4).

Die Dachränder können in ihren zur Auflage auf den Karosserierahmen 4 vorgesehenen Bereichen mit in den Schaumstoff eingebetteten Verstärkungsteilen 17 versehen sein (Fig. 5 und 11), die für eine Aussteifung des Fahrzeugdachs sorgen und damit nicht nur der Transport- und Handhabungsfähigkeit des vormontierten Fahrzeugdachs, sondern auch zu seiner Versteifung nach der Montage am Karosserierahmen 4 dienen. Die hierfür vorgesehenen im Schaumstoff eingebetteten Verstärkungsteile 17 müssen nicht vollständig vom Schaumstoff umhüllt sein, sondern können mit ihren unteren Flächen freiliegen, so daß sie dem Karosserierahmen 4 unmittelbar zur Befestigung flächig aufgelegt werden können bzw. mit ihrer unteren Fläche unmittelbar flächig anliegen.

Bei Ausbildung des Fahrzeugdachs mit einem Schiebedach kann über den Randspalt zwischen der festen Dachhaut 1 und dem Schiebedeckel 26 eintretendes und von dem Schiebedachrahmen 25 aufgefangenes Wasser nach außen abgeleitet werden, wozu dann ein im Eckbereich des Schiebedachrahmens 25 in die an der Unterseite der festen Dachhaut 1 angebrachten Schaumschicht eingebettetes Schlauch- oder Rohrstück 31 vorgesehen ist (Fig. 12), das einerseits auf eine Abflußtülle 32 des Schiebedachrahmens 25 dicht aufgesteckt ist und andererseits mit einer Öffnung an der Außenkante des Fahrzeugdachs endet. Zweckmäßig mündet das Schlauch- oder Rohrstück 31 an der Außenkante des Fahrzeugdachs in eine Wasserablauffuge, die zwischen dem Außenrand der Dachhaut 1 und der ihm zugekehrten Fläche des Karosserierahmens 4 gebildet ist.

## Patentansprüche

1. Fahrzeugdach, insbesondere Kraftfahrzeugdach, das einteilig mit einem Dachhimmel (2) ausgebildet, getrennt von der Fahrzeugkarosserie herstellbar, mit seinen Außenrändern auf einen Karosserierahmen (4) auflegbar und mit diesem fest verbindbar ist, wobei der Dachhimmel (2) mit zur Verkleidung des Karosserierahmens (4) ausgebildeten Bereichen (6) versehen ist, an denen mindestens ein stoßabsorbierendes Sicherheitselement (23) oder mindestens ein Airbag (34) vormontiert ist, um ein Auftreffen von Körperteilen der Fahrzeuginsassen auf den Karosserierahmen (4) zu verhindern bzw. die Folgen eines Auftreffens zu mildern, wobei der Dachhimmel durch eine Innenschale (2) aus einem Schaumkunststoff, beispielsweise einem PUR-Schaumstoff gebildet ist, die eine obere Schicht (5) und eine untere Schicht (6) aufweist, von denen letztere die zur Verkleidung des Karosserierahmens (4) ausgebildeten Bereiche bildet und für den Durchtritt durch die von dem Karosserierahmen (4) begrenzte Karosserieöffnung (35) nach unten umbiegbar ist.

2. Fahrzeugdach nach Anspruch 1, wobei die untere Schicht (6) der Innenschale (2) in Teilbereichen dickwandiger ausgebildet ist, wobei diese Schichtverdickungen der unteren Schicht (6) die stoßabsorbierenden Sicherheitselemente (23) bilden.

3. Fahrzeugdach nach Anspruch 1, wobei zwischen der oberen Schicht (5) und der unteren Schicht (6) der Innenschale (2) Hohlräume vorgesehen sind, die Luftkanäle ausbilden.

4. Fahrzeugdach nach Anspruch 1, wobei der Außenrand der zur Verkleidung des Karosserierahmens (4) ausgebildeten Bereiche zur Befestigung an Flanschrändern des Karosserierahmens (4) mittels Kunststoffprofilstreifen, Keder od. dgl. (15) entsprechend paßgerecht beschnitten bzw. vorgeformt sind.

## Claims

1. Vehicle roof, particularly motor vehicle roof, which is constructed in one piece with a roof lining (2), is manufacturable separately from the vehicle body, can be placed with its outer edges on a body frame (4) and is firmly connectable thereto, the roof lining (2) being provided with areas (6) constructed for lining the body frame (4) and on which is prefitted at least one shock-absorbing safety element (23) or at least one airbag (34) in order to prevent an impact of body parts of the vehicle occupants with the body frame (4) or in order to reduce the consequences of such an impact, the roof lining being formed by an inner shell (2) made from a foam material, e.g. a PUR foam, which has an upper layer (5) and a lower layer (6), whereof the latter forms the areas for lining the body frame (4) and which can be bent downwards for passage through the body opening (35) bounded by the body frame (4).

2. Vehicle roof according to claim 1, the lower layer (6) of the inner shell (2) having a thicker-walled construction in partial areas, said layer thickenings of the lower layer (6) forming the shock absorbing safety elements (23).

3. Vehicle roof according to claim 1, where between the upper layer (5) and the lower layer (6) of the inner shell (2) cavities are provided which form air ducts.

4. Vehicle roof according to claim 1, the outer edge of the areas for lining the body frame (4) are preshaped or trimmed in precise fitting manner by means of plastic profile strips, beadings or the like (15) for fixing to flange edges of the body frame (4).

## Revendications

1. Toit de véhicule, en particulier toit de véhicule automobile qui, formé d'un garnissage de toit (2) d'une seule pièce, est apte à être fabriqué séparément de la carrosserie, est apte à être posé avec ses bords extérieurs sur un cadre de carrosserie (4) et est apte à être relié solidement à ce cadre (4), étant précisé que le garnissage de toit (2) est pourvu de zones (6) conçues pour recouvrir le cadre de carrosserie (4), sur lesquelles au moins un élément de sécurité absorbant les chocs (23) ou au moins un airbag (34) est prémonté pour empêcher que des parties du corps des occupants du véhicule ne heurtent le cadre de carrosserie (4) ou pour atténuer les conséquences de ce choc, et étant précisé que le garnissage de toit est formé par un revêtement intérieur (2) en matière plastique alvéolaire, par exemple en mousse PUR, qui comporte une couche supérieure (5) et une couche inférieure (6), cette dernière formant les zones conçues pour recouvrir le cadre de carrosserie (4) et étant apte à être pliée vers le bas afin de passer à travers l'ouverture de carrosserie (35) définie par le cadre de carrosserie (4).

2. Toit de véhicule selon la revendication 1, dans lequel la couche inférieure (6) du revêtement intérieur (2) a une épaisseur de paroi plus grande dans des zones partielles, ces épaississements de la couche inférieure (6) formant les éléments de sécurité absorbant les chocs (23).

3. Toit de véhicule selon la revendication 1, dans lequel il est prévu, entre la couche supérieure (5) et la couche inférieure (6) du revêtement intérieur (2), des cavités qui forment des conduits d'air.

4. Toit de véhicule selon la revendication 1, dans lequel le bord extérieur des zones conçues pour recouvrir le cadre de carrosserie (4) est coupé ou préformé d'une manière appropriée et ajustée en vue d'être fixé à des bords en forme d'ailes du cadre de carrosserie (4) à l'aide de bandes profilées en matière plastique, de bourrelets ou d'élément similaires (15).
